# EUROPÄISCHE PATENTSCHRIFT

(11) **EP 2 676 013 B1**
(45) Veröffentlichungstag und Bekanntmachung des Hinweises auf die Patenterteilung: **16.12.2015**
(21) Anmeldenummer: 11808858.2
(22) Anmeldetag: 22.12.2011
(51) Int. Cl.: F01L 1/344, F01L 1/352

(54) **3-WELLEN-VERSTELLGETRIEBE MIT ELASTISCHEM KOPPELGLIED**
THREE-SHAFT TRANSMISSION HAVING AN ELASTIC COUPLING ELEMENT
MÉCANISME DE RÉGLAGE À TROIS ARBRES PRÉSENTANT UN ORGANE D'ACCOUPLEMENT ÉLASTIQUE

(30) Priorität: 14.02.2011 DE 102011004069
(43) Veröffentlichungstag der Anmeldung: 25.12.2013
(73) Patentinhaber: Schaeffler Technologies AG & Co. KG, 91074 Herzogenaurach (DE)
(72) Erfinder: SCHÄFER, Jens, 91074 Herzogenaurach (DE); KOHRS, Mike, 91097 Oberreichenbach (DE); BALKO, Jeffrey S., 91074 Herzogenaurach (DE)
(86) Internationale Anmeldenummer: PCT/EP2011/073780
(87) Internationale Veröffentlichungsnummer: WO 2012/110149

(56) Entgegenhaltungen:
- EP-A1- 1 607 589
- EP-A1- 2 006 501
- EP-A1- 2 463 485
- DE-A1-102008 039 008
- DE-A1-102008 043 689
- DE-A1-102009 000 690
- JP-A- 2000 130 117
- US-A1- 2007 199 531
- US-A1- 2010 288 216

## Beschreibung

Die Erfindung betrifft ein 3-Wellen-Verstellgetriebe gemäß dem Oberbegriff des Anspruchs 1 mit einem mit einer Antriebswelle drehfest verbindbaren Antriebsteil, einem mit einer Abtriebswelle drehfest verbindbaren Abtriebsteil und einem mit einer Verstellwelle drehfest verbindbaren Stellglied.

3-Wellen-Verstellgetriebe kommen beispielsweise in Verbrennungsmotoren zum Verstellen von Phasenwinkeln, vorrangig zur Verstellung der Öffnungs- und Schließzeiten der Gaswechselventile zum Einsatz (Nockenwellenversteller, Phasenversteller für Aktuatorwellen bei variablen Ventiltrieben). Der Phasenversteller ist dabei als Stellglied in einem 3-Wellen-System angeordnet. Primär wird dem 3-Wellen-System über die Antriebswelle (z.B. Kettenrad) die Antriebsleistung zugeführt, welche über die Abtriebswelle (z.B. Nockenwelle) wieder abgegeben wird. Das Stellglied ist dabei als Bindeglied zwischen der Antriebswelle und der zu treibenden Welle im Leistungsfluss angeordnet. Es erlaubt über eine dritte Welle (Verstellwelle) überlagert zur Antriebsleistung zusätzlich mechanische Leistung in das Wellensystem einzukoppeln oder aus diesem abzuführen. Dadurch kann die von der Antriebswelle vorgegebene Bewegungsfunktion (Phasenwinkel) zur Abtriebswelle verändert werden.

Beispiele für derartige 3-Wellen-Verstellgetriebe sind Taumelscheibengetriebe und Innenexzentergetriebe, welche beispielsweise in der WO 2006/018080 beschrieben sind. Hierzu gehören auch die aus der WO 2005/080757 bekannten Wellgetriebe und die in der US 2007/0051332 A1 und US 2003/0226534 A1 enthaltenen Getriebe.

Verschiedene Phasenversteller sind aus dem Stand der Technik bekannt. Beispielsweise sind in DE 10 2004 009 128 A1, DE 10 2005 059884 A1 und DE 10 2004 038 681 A1 elektromechanische Nockenwellenversteller beschrieben.

Aus der DE 102 48 351 A1 ist ein elektromechanischer Nockenwellenversteller bekannt, bei dem der Verstellmotor mittels einer lösbaren Kupplung mit dem Verstellgetriebe verbunden ist. Durch eine entsprechende Auslegung der Kupplung ist das auf die Verstellwelle übertragbare Drehmoment begrenzbar. Diese wirkt dann als Sicherheitskupplung.

Ein Sonderfall eines 3-Wellen-Verstellgetriebes ist eine 2-Wellen-Anordnung in Verstellantrieben, bei denen die Antriebswelle gehausefest ist, d. h. es wird nur Leistung zwischen Verstellwelle und Abtriebswelle übertragen. Eine solche Vorrichtung dient dazu, eine mit hoher Geschwindigkeit und niedriger Last eingespeiste Antriebsleistung eines Stellers in eine Abtriebsleistung mit geringer Geschwindigkeit und hoher Last zu wandeln und findet Verwendung beispielsweise in Untersetzungsvorrichtungen für Stellantriebe im Automotivbereich sowie in Industrieanwendungen, z.B. der Robotik.

Um die Peripherie bei Steuerungsfehlern der Aktuatorik vor unerwünschten Kollisionen von Bauteilen zu schützen, wird der Verstellbereich bzw. Antriebsbereich durch Begrenzung des Drehwinkels einer der drei Wellen relativ zu einer zweiten Welle bzw. relativ zum Gehäuse eingeschränkt. Dazu wird ein mechanischer Anschlag als integraler Bestandteil der Vorrichtung verwendet. Im bekannten Stand der Technik der Nockenwellenversteller ist der Anschlag zwischen der Abtriebswelle und der Antriebswelle vorgesehen, da die Verstellwelle in der Regel einen Winkel von mehr als 360° zurücklegt.

In einer solchen Ausführung wird dann die nicht unmittelbar im Verstellwinkel bzw. Antriebswinkel begrenzte Verstellwelle im Falle des Anschlages über die Getriebekinematik und die Steifigkeit der Getriebeglieder abgebremst, sobald die Abtriebsseite die Grenze des Drehwinkels erreicht. Dabei können sich in Folge der extrem hohen Lasten Getriebeteile so stark verformen, dass sie untereinander kollidieren und das Stellglied zum Verklemmen bringen. Weiterhin können Getriebeteile frühzeitig ermüden bzw, müssen für den Normalbetrieb überdimensioniert werden, um auch die hohen Lasten im Falle des ungebremsten Anschlags zu ertragen.

Die Aufgabe der Einfindung besteht darin, ein 3-Wellen-Verstellgetriebe derart auszubilden, dass die beim Erreichen eines Anschlages im Stellglied auftretenden Impulslasten in ihrer Wirkung gedämpft sind.

Die Lösung der Aufgabenstellung gelingt durch ein 3-Wellen-Verstellgetriebe mit den Merkmalen des Anspruchs 1.

Vorteilhafte Augestaltungen der Erfindung sind den abhängigen Patentansprüche zu entnehmen.

Ein 3-Wellen-Verstellgetriebe umfasst ein mit einer Antriebswelle drehfest verbindbares Antriebsteil, ein mit einer Abtriebswelle verbindbares Abtriebsteil und ein mit einer Verstellwelle eines Stellers verbindbares Stellglied, wobei zwischen zwei der drei Wellen ein mechanischer Anschlag zur Begrenzung eines Verstellwinkels zwischen Antriebswelle und Abtriebswelle vorgesehen ist. Erfindungsgemäß weist der Anschlag ein elastisches Koppelglied zur Dämpfung eines Aufpralls im Anschlagfall auf.

Die Erfindung wird nachfolgend an einem Nockenwellenversteller beschrieben, ist aber auf andere 3-Wellen-Verstellgetriebe und 2-Wellen-Anordnungen (gehäusefestes Antriebsteil) übertragbar.

Das elastische Koppelglied wird in einer bevorzugten Ausführungsform in einem elektromechanischen Nockenwellenversteller verwendet, bei dem der Anschlag zwischen dem Antriebsteil und dem Antriebsteil vorgesehen ist. Der Anschlag ist durch einen Anschlagring mit einer Anschlagnase auf der Antriebsseite und eine Anschlagscheibe mit einer Kulisse auf der Abtriebsseite gebildet.

Die Kulisse und die in der Kulisse geführte Anschlagnase weisen jeweils mindestens eine (im Normalfall zwei) Anschlagflächen auf, die sich im Anschlagfall gegenseitig berühren. Vorzugsweise ist das Koppelglied zwischen den Anschlagflächen vorgesehen.

Die Vorteile der Erfindung sind insbesondere darin zu sehen, dass mit einfachen konstruktiven Mitteln eine effektive interne Teilentkopplung der äußeren Last erreicht werden kann. Das elastische Koppelglied sorgt ab einem bestimmten Lastmoment für eine größere Nachgiebigkeit (d.h. geringere Steife) im Kraftfluss zwischen den korrespondierenden Anschlagflächen beim Erreichen des Anschlages. Ein Großteil der enthaltenden kinetischen Energie der drehenden Wellen (Abtriebswelle und Verstellwelle) wird somit beim Auftreffen auf den Anschlag in Verformungsenergie umgewandelt. Durch den größeren Weg wird Arbeit verrichtet und damit quasi Bewegungsenergie "vernichtet". Durch die unvermeidliche innere und äußere Reibung wird ebenfalls Energie als Wärme abgeführt.

Bei der Dimensionierung des elastichen Koppelgliedes muss die maximale tretende Energie im Anschlagfall zugrunde gelegt werden. Das elastische Koppelglied kann als mechanisches, pneumatisches oder hydraulisches Koppelglied oder einer Kombination daraus ausgeführt sein. Als mechanisches Koppelglied eignet sich beispielsweise eine elastische Auflage auf einer oder beiden Anschlagflächen oder ein Federmechanismus, der entweder zwischen den Anschlagflächen oder in einer drehelastischen Lagerung ausgeführt sein kann. Wenn das elastische Koppelglied stattdessen als pneumatisches oder hydraulisches Koppelglied ausgeführt ist, so kommt hierfür ein mit Druck beaufschlagter Kolben in Frage, der beispielsweise zwischen den Anschlagflächen vorgesehen ist und der in tangentialer oder vermittels einer Rampe oder eines Hebelgelenks in radialer Richtung verschoben wird.

Bevorzugte Ausführungsformen der Erfindung werden nachfolgend anhand der Figuren näher erläutert. Es zeigen:
- Fig. 1:: eine Prinzipskizze eines mechanischen Anschlages eines Nockenwellenverstellers mit einem Koppelglied;
- Fig. 2:: eine Prinzipskizze eines mechanischen Anschlages eines Nockenwellenverstellers mit zwei Koppelgliedern;
- Fig. 3:: drei Prinzipskizzen verschiedener Koppelglieder in einem Nockenwellenversteller;
- Fig. 4:: eine sekundär bevorzugte Ausführungsform eines Nockenwellenverstellers in drei verschiedenen Ansichten;
- Fig. 5:: eine Prinzipskizze eines radial verschiebbaren Kolbens als Koppelglied;
- Fig. 6:: eine bevorzugte Ausführungsform eines Nockenwellenverstellers mit einem Federring;
- Fig. 7:: eine Detaildarstellung des Nockenwellenverstellers aus Fig. 6;
- Fig. 8:: eine Detaildarstellung des Nockenwellenverstellers mit veränderten Formelementen und
- Fig. 9: eine Detaildarstellung des Nockenwellenverstellers mit einer alternativen Positionierung der Formelemente.

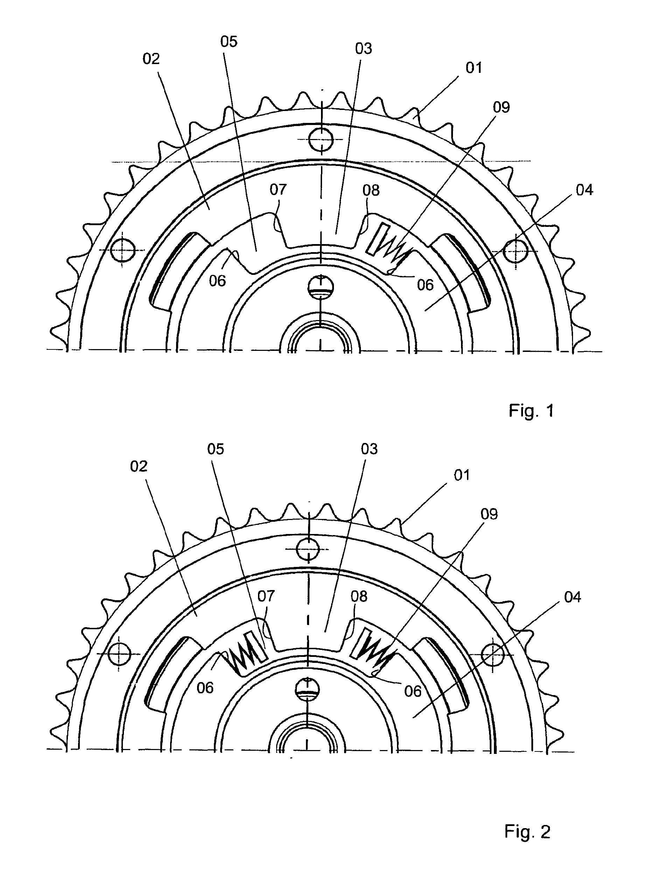

In Fig. 1 ist eine Prinzipskizze eines Anschlages eines elektromechanischen Nockenwellenverstellers dargestellt. Ein Kettenrad 01 ist der Antriebsteil des Nockenwellenverstellers. Es ist mittels einer Kette mit einer Kurbelwelle antriebswirksam verbunden (nicht dargestellt). Das Kettenrad 01 trägt einen Anschlagring 02 mit einer Anschlagnase 03. Innerhalb des Anschlagringes 02 ist eine mit dem Nockenwellenrad (Abtriebsteil) fest verbundene Anschlagscheibe 04 mit einer Kulisse 05 angeordnet, in der die Anschlagnase 03 geführt und relativ zur Anschlagscheibe beweglich ist. Die Kulisse 05 der Anschlagscheibe ist durch Anschlagflächen 06 begrenzt.

Am Anschlagring 02 sind Anschlagflächen als Früh-Anschlag 07 und Spät-Anschlag 08 (antriebsseitig) vorgesehen, welche durch Zusammenwirken mit den Anschlagflächen 06 der Anschlagscheibe 04 den Verstellwinkel zwischen Kurbelwelle und Nockenwelle begrenzen.

In der dargestellten Ausführungsform ist am Spät-Anschlag 08 ein elastisches Koppelglied, hier als Feder 09 ausgeführt, vorgesehen. Hierdurch erfolgt bei Erreichen des Spät-Anschlages 08 ein weicher Anschlag mit hoher Elastizität. Der Früh-Anschlag 07 ist als steifer Anschlag ausgeführt.

Die in Fig. 2 gezeigte Ausführungsform unterscheidet sich von der in Fig. 1 gezeigten nur dadurch, dass sowohl am Früh-Anschlag 07 als auch am Spät-Anschlag 08 jeweils Federn 09 als elastische Koppelglieder vorgesehen sind.

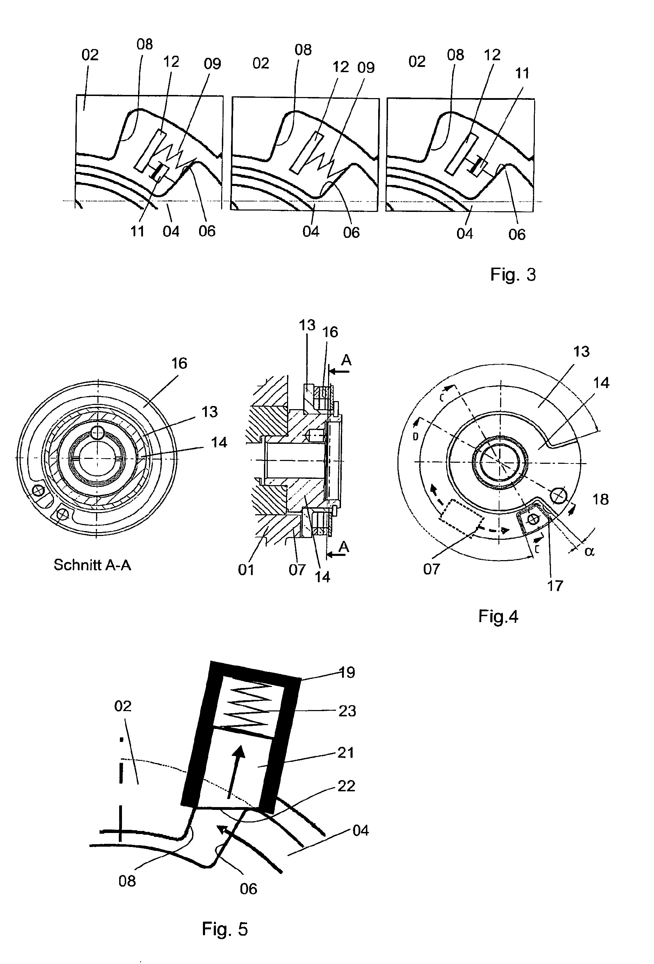

In Fig. 3 sind als Detailansichten drei verschiedene Ausführungsformen für Koppelglieder am Beispiel des Spät-Anschlages 08 schematisch dargestellt. Diese können durch die bereits genannte Feder 09, einen hydraulischen oder pneumatischen Kolben 11, oder eine Kombination aus Feder 09 und Kolben 11 gebildet sein. Die praktische Ausgestaltung der Ausführungsformen wird dem Fachmann keine Schwierigkeiten bereiten.

In den dargestellten Varianten sind die Koppelglieder jeweils in den Anschlagflächen 06 der Anschlagscheibe 04 angeordnet und weisen als Anschlagfläche einen Puffer 12 auf, welcher im Anschlagfall auf den Spät-Anschlag 08 auftrifft. Diese symbolische Darstellung des Koppelgliedes kann der Fachmann leicht in die beanspruchten technischen Ausführungsformen umsetzen. Selbstverständlich sind diese Ausführungsformen auch für den Früh-Anschlag 07 (Fig. 1, 2) anwendbar.

Fig. 4 zeigt eine Ausführungsform eines nicht beanspruchten 3-Wellen-Verstellgetriebes mit einer Torsionsfeder 16 als elastischem Koppelglied. Dabei zeigt die linke Abbildung eine Längsschnittdarstellung eines Nockenwellenverstellers, die mittlere Abbildung eine Querschnittsdarstellung des Nockenwellenverstellers und die rechte Abbildung eine Draufsicht auf den Nockenwellenversteller, von der Seite der Nockenwelle aus gesehen.

Die nockenwellenfeste Anschlagscheibe umfasst eine Primäranschlagscheibe 13 und eine Sekundäranschlagscheibe 14. Die Sekundäranschlagscheibe 14 liegt nockenwellenfest im Klemmverband einer Zentralschraube (nicht dargestellt). Die Primäranschlagscheibe 13 ist drehbar auf der Sekundäranschlagscheibe 14 gelagert. Torsionsfedern 16 spannen den Primäranschlag 17 um einen Betrag eines Dämpfungswinkels α gegenüber dem Sekundäranschlag 18 elastisch vor. Im Anschlagsfall trifft die Anschlagfläche 07 oder 08 des Anschlagringes zunächst auf den Primäranschlag 17. Je nach Energiegehalt drückt sie diesen gegen die Torsionsfeder 16 weiter und verliert dabei Energie. Die Dämpfungseigenschaften sind solange gewährleistet, bis der Primäranschlag 13 auf den Sekundäranschlag 14 trifft. Dieser charakterisiert die mechanisch maximal zulässige Endlage. Selbstverständlich kann die Dämpfungsfunktion alternativ auch abtriebsseitig gebildet sein.

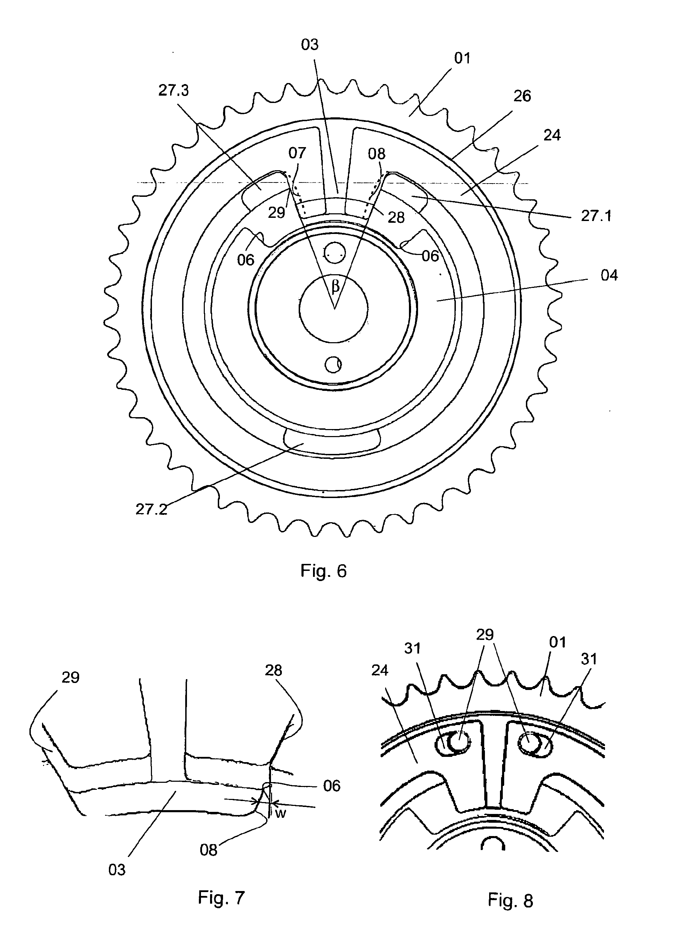

Fig. 6 zeigt eine nicht beanspruchte Ausführungsform eines Nockenwellenverstellers mit einem Federring 24 als elastisches Koppelglied. Der Federring 24 ist wie ein Sprengring geöffnet und weist zwei radial nach innen gerichtete Federenden mit Primäranschlagflächen 28, 29 auf. Der Öffnungswinkel β und die Federkonstante des Federringes 24 sind dabei so auszulegen, dass eine Dämpfung des Anschlages der Anschlagnase über einen Arbeitsweg w (Fig. 7) erreicht wird. Die Anschlagnase 03 mit den Anschlagflächen 07, 08 ist gestrichelt dargestellt.

Der Federring 24 ist in einem Federgehäuse 26 im Kettenrad 01 gelagert und mittels Formelementen 27.1, 27.2, 27.3, welche am Kettenrad 01 vorgesehen sind, zentriert und geführt. Die Anschlagfläche 06 der Anschlagscheibe 04 trifft zunächst eine Primäranschlagfläche 28 des Federringes 24. Aus der Aufschlagenergie und der Federsteife ergibt sich ein Federmoment, welches den Federring über den je nach Auslegung 1°-6° langen Arbeitsweg zusammendrückt. Dabei bleibt die Federlänge konstant, der Öffnungswinkel β wird kleiner. Die Abstützung des Federmomentes erfolgt dabei über das andere Federende 29 in dem zugehörigem Formelement 27.3. Am Ende des Arbeitsweges trifft die Anschlagfläche 06 auf die Anschlagfläche 08 der Anschlagnase 03 im Kettenrad 01 und erreicht damit das eigentliche Ende des Verstellweges.

In Fig. 7 ist der soeben beschriebene Zustand in einer Detaildarstellung gezeigt.

Selbstverständlich sind alternative Ausführungsformen und Anordnungen des Federringes möglich, solange das beschriebene Wirkprinzip eingehalten wird. Beispielsweise zeigt Fig. 8 eine veränderte Anordnung der Formelemente und der Führung des Federringes 24 durch kettenradfeste Pins 29 (als Formelemente), die in entsprechenden Öffnungen 31 des Federringes 24 geführt sind.

### Bezugszeichenliste

- 01: Kettenrad
- 02: Anschlagring
- 03: Anschlagnase
- 04: Anschlagscheibe
- 05: Kulisse
- 06: Anschlagfläche
- 07: Früh-Anschlagfläche
- 08: Spät-Anschlagfläche
- 09: Feder
- 10: -
- 11: pneumatischer Kolben
- 12: Puffer
- 13: Primäranschlagscheibe
- 14: Sekundäranschlagscheibe
- 15: -
- 16: Torsionsfeder
- 17: Primäranschlag
- 18: Sekundäranschlag
- 19: Koppelglied
- 20: -
- 21: Kolben
- 22: Kontur
- 23: Feder-Dämpfer-Element

## Patentansprüche

1. 3-Wellen-Verstellgetriebe, umfassend ein mit einer Antriebswelle drehfest verbindbares Antriebsteil (01), ein mit einer Abtriebswelle verbindbares Abtriebsteil und ein mit einer Verstellwelle verbindbares Stellglied, wobei zwischen zwei der drei Wellen ein mechanischer Anschlag zur Begrenzung eines Verstellwinkels zwischen Antriebswelle und Abtriebswelle vorgesehen ist, **dadurch gekennzeichnet, dass** der Anschlag ein elastisches Koppelglied zur Dämpfung eines Aufpralls im Anschlagfall aufweist, dass der Anschlag durch einen Anschlagring (02) mit einer Anschlagnase (03) und eine Anschlagscheibe (04) mit einer Kulisse (05) gebildet ist, wobei der Anschlagring (02) drehfest mit dem Antriebsteil verbunden ist und die Anschlagscheibe (04) drehfest mit dem Abtriebsteil verbunden ist, und wobei die Anschlagnase (03) und die Kulisse (05) jeweils mindestens eine Anschlagfläche (06, 07, 08) aufweisen, die sich im Anschlagfall gegenseitig berühren und dass das elastische Koppelglied durch einen elastischen Belag auf mindestens einer der Anschlagflächen (06, 07,08) gebildet ist.

2. 3-Wellen-Verstellgetriebe nach Anspruch 1, **dadurch gekennzeichnet, dass** das Koppelglied eine Dämpfungscharakteristik aufweist.

3. 3-Wellen-Verstellgetriebe nach Anspruch 1 oder 2, **dadurch gekennzeichnet, dass** die Anschlagscheibe ein Primäranschlagscheibe (13) und eine Sekundäranschlagscheibe (16) umfasst, zwischen denen eine Torsionsfeder (16) als Koppelglied angeordnet ist.

## Claims

1. Three-shaft adjusting gear mechanism, comprising a drive part (01) which can be connected fixedly to a drive shaft so as to rotate with it, an output part which can be connected to an output shaft, and an actuator which can be connected to an adjusting shaft, a mechanical stop for limiting an adjusting angle between the drive shaft and the output shaft being provided between two of the three shafts, **characterized in that** the stop has an elastic coupling member for damping an impact in the stop case, **in that** the stop is formed by a stop ring (02) with a stop lug (03) and a stop disc (04) with a slotted guide (05), the stop ring (02) being connected fixedly to the drive part so as to rotate with it, and the stop disc (04) being connected fixedly to the output part so as to rotate with it, and the stop lug (03) and the slotted guide (05) having in each case at least one stop face (06, 07, 08) which come into contact with one another in the stop case, and **in that** the elastic coupling member is formed by an elastic lining on at least one of the stop faces (06, 07, 08).

2. Three-shaft adjusting gear mechanism according to Claim 1, **characterized in that** the coupling member has a damping characteristic.

3. Three-shaft adjusting gear mechanism according to Claim 1 or 2, **characterized in that** the stop disc comprises a primary stop disc (13) and a secondary stop disc (16), between which a torsion spring (16) is arranged as a coupling member.

## Revendications

1. Mécanisme de réglage à 3 arbres, comprenant une partie d'entraînement (01) pouvant être connectée de manière solidaire en rotation à un arbre d'entraînement, une partie de sortie pouvant être connectée à un arbre de sortie et un organe de commande pouvant être connecté à un arbre de réglage, une butée mélanique destinée à limiter un angle de réglage entre l'arbre d'entraînement et l'arbre de sortie étant prévue entre deux des trois arbres, **caractérisé en ce que** la butée présente un organe d'accouplement élastique pour l'amortissement d'un choc en cas de venue en butée, **en ce que** la butée est formée par une bague de butée (02) avec un nez de butée (03) et un disque de butée (04) avec une coulisse (05), la bague de butée (02) étant connectée de manière solidaire en rotation à la partie d'entraînement et le disque de butée (04) étant connecté de manière solidaire en rotation à la partie de sortie, et le nez de butée (03) et la coulisse (05) présentant à chaque fois une ou plusieurs surfaces de butée (06, 07, 08) qui sont en contact mutuel en cas de venue en butée, et **en ce que** l'organe d'accouplement élastique est formé par une garniture élastique sur au moins l'une des surfaces de butée (06, 07, 08).

2. Mécanisme de réglage à 3 arbres selon la revendication 1, **caractérisé en ce que** l'organe d'accouplement présente une caractéristique d'amortissement.

3. Mécanisme de réglage à 3 arbres selon la revendication 1 ou 2, **caractérisé en ce que** le disque de butée comprend un dispositif de butée primaire (13) et un disque de butée secondaire (16) entre lesquels est disposé un ressort de torsion (16) en tant qu'organe d'accouplement.
